**Europäisches Patentamt**

**European Patent Office**

**Office européen des brevets**

(19)

(11) Veröffentlichungsnummer: **0 134 927**

**A1**

(12) # EUROPÄISCHE PATENTANMELDUNG

(21) Anmeldenummer: **84107075.8**

(22) Anmeldetag: **20.06.84**

(51) Int. Cl.⁴: **C 08 F 214/06**
C 08 F 2/16, C 08 L 27/06
//(C08F214/06, 218:14, 220:04)

(30) Priorität: **17.08.83 DE 3329656**

(43) Veröffentlichungstag der Anmeldung:
**27.03.85 Patentblatt 85/13**

(84) Benannte Vertragsstaaten:
**BE CH DE FR GB IT LI SE**

(71) Anmelder: **CHEMISCHE WERKE HÜLS AG**
**- RSP Patente / PB 15 - Postfach 13 20**
**D-4370 Marl 1(DE)**

(72) Erfinder: **Kruse, Wolfgang Andreas, Dr.**
**Leverkusenerstrasse 14**
**D-4370 Marl(DE)**

(54) **Verfahren zur Herstellung von Vinylchlorid-Copolymerisaten und deren Verwendung zur Herstellung von vernetztem Weich-Polyvinyl-chlorid.**

(57) Es handelt sich um ein diskontinuierliches Verfahren zur Herstellung von carboxylgruppenhaltigen Copolymerisaten von Vinylchlorid durch Emulsionspolymerisation oder durch Polymerisation nach dem Prädispersionsverfahren, wobei die Monomeren in der einzupolymerisierenden Relation stets mit der Geschwindigkeit zugegeben werden, mit der sie in das Copolymere eingebaut werden. Die so hergestellten Copolymerisate eignen sich zur Herstellung von vernetztem Weich-Polyvinylchlorid durch Zusatz zwei- oder polyfunktioneller Epoxidverbindungen zu Plastisolen, die aus den erfindungsgemäß erhaltenen Copolymeren hergestellt wurden und anschließendes Gelieren bei höherer Temperatur.

EP 0 134 927 A1

<u>Verfahren zur Herstellung von Vinylchlorid-Copolymerisaten und</u>
<u>deren Verwendung zur Herstellung von vernetztem Weich-Polyvinyl-</u>
<u>chlorid</u>

Gegenstand der Erfindung ist ein Verfahren zur Herstellung von Copolymerisaten aus VC und ungesättigten Verbindungen, die als funktionelle Gruppen eine oder mehrere -COOH- oder -COO⁻-Gruppen besitzen, durch Emulsionspolymerisation unter Verwendung wasserlöslicher Initiatoren und Emulgatoren oder durch Polymerisation nach dem Prädispersionsverfahren unter Verwendung von höheren Fettalkoholen und Emulgatoren sowie wasser- und (oder) öllöslicher Initiatoren. Ferner ist Gegenstand der Erfindung die Verwendung dieser Copolymerisate zur Herstellung von vernetztem Weich-Polyvinylchlorid, dadurch, daß man den mit den erfindungsgemäß erhaltenen Copolymeren hergestellten Plastisolen zwei- oder höherfunktionelle Epoxidverbindungen zusetzt und geliert.

Die Herstellung von vernetztem Weich-Polyvinylchlorid ist bereits bekannt, vgl. CA-PS 881 575. Gemäß dieser Literaturstelle werden Copolymere aus Vinylchlorid und carboxylgruppenhaltigen Monomeren zu Plastisolen verarbeitet, aus welchen vernetzte Polyvinylchlorid-Weichschaumstoffe hergestellt werden. Laut Anspruch 1 der CA-PS 881 575 sollen 25 bis 100 Gewichtsprozent an Epoxidverbindung zwecks Vernetzung eingesetzt werden. In den Beispielen werden als Mindestmenge an benötigter Epoxy-Verbindung sogar 50 Gewichtsprozent genannt.

Es stellte sich daher die Aufgabe, carboxylgruppenhaltige Copolymere des Vinylchlorids herzustellen, deren Bedarf an epoxidgruppenhaltiger Verbindung bei der Vernetzungsreaktion wesentlich geringer wäre, um somit die Wirtschaftlichkeit der Vernetzungsreaktion zu verbessern.

Es wurde nun überraschenderweise gefunden, daß die Wirtschaftlichkeit der Vernetzungsreaktion sehr erheblich zu steigern ist, wenn man für die Vernetzung Copolymere einsetzt, welche erhalten werden durch ein diskontinuierliches Verfahren zur Herstellung von Copolymerisaten aus Vinylchlorid und ungesättigten Verbindungen, die als funktionelle Gruppen eine oder mehrere -COOH- oder -COO⁻ -Gruppen tragen, durch Emulsionspolymerisation unter Verwendung wasserlöslicher Katalysatoren und Emulgatoren oder durch Polymerisation nach dem Prädispersionsverfahren unter Verwendung von höheren Fettalkoholen und Emulgatoren sowie wasser- und (oder) öllöslicher Katalysatoren, das dadurch gekennzeichnet ist, daß die Monomeren in der einzupolymerisierenden Relation stets mit der Geschwindigkeit zugegeben werden, mit der sie in das Copolymere eingebaut werden.

Die Emulsionscopolymerisation von Acrylaten in einer semikontinuierlichen Verfahrensweise, bei der ein stationärer Zustand aufrechterhalten wird, ist bereits in "Die Angewandte Makromolekulare Chemie" 25 (1972), Seiten 113 bis 119, Nr. 361, beschrieben. Es wird dabei allerdings die Polymerisationsgeschwindigkeit durch die Zugabegeschwindigkeit der Monomeren bestimmt. Dies bedeutet für eine Polymerisation mit Vinylchlorid, daß unterhalb des Sättigungsdruckes des Vinylchlorids gearbeitet wird.

Bei der Polymerisation des Vinylchlorids führt das Arbeiten unterhalb des Sättigungsdruckes des Vinylchlorids zu Produkten verminderter Thermostabilität. Es ist daher notwendig, daß die erfindungsgemäße Arbeitsweise beim Sättigungsdruck des Vinylchlorids stattfindet.

Erfindungsgemäß wird ein stationärer Zustand hergestellt, indem entweder die Polymerisationsgeschwindigkeit der Monomerzugabegeschwindigkeit angepaßt wird (Beispiel 1 und 2) oder indem die Zugabegeschwindigkeit der Monomeren auf die jeweilige Polymerisationsgeschwindigkeit eingestellt wird (Beispiel 6).

Die Polymerisationsgeschwindigkeit kann durch Variation des Katalysators, nach Art und Menge, der Zugabegeschwindigkeit der Monomeren angepaßt werden. Zweckmäßigerweise wird man dabei die Monomeren linear zudosieren, d. h. man wird in der Zeiteinheit stets die gleiche Menge kontinuierlich zugeben.

Es ist daneben auch die andere Verfahrensweise praktikabel, nach der durch regeltechnische Maßnahmen die Dosiergeschwindigkeit der Monomeren der augenblicklichen Polymerisationsgeschwindigkeit stets angepaßt wird. Die Regelung kann über den Umsatz erfolgen. Es kann dazu eines der bekannten Systeme eingesetzt werden, die zur kontinuierlichen Umsatzmessung geeignet sind, wie beispielsweise kalorische Messungen oder Ultraschallmessungen.

Als comonomere ungesättigte Verbindungen, die als funktionelle Gruppen eine oder mehrere -COOH- oder -COO⁻-Gruppen tragen, kommen z. B. in Betracht: Acrylsäure, Methacrylsäure, Itaconsäure, Maleinsäure, Fumarsäure, Maleinsäuremonomethylester, Maleinsäuremonoethylester, Maleinsäuremonopropylester, Maleinsäuremonobutylester, Maleinsäuremonoamylester, Maleinsäuremonohexylester, Maleinsäuremonoheptylester, Maleinsäuremonooctylester, Maleinsäuremononoylester, Maleinsäuremonodecylester, Maleinsäuremonoundecylester, Maleinsäuremonododecylester, wobei der Alkoholanteil verzweigt oder unverzweigt sein kann. Es lassen sich die entsprechenden Monoester der Fumarsäure oder der Itaconsäure einsetzen. Mit besonderem Vorteil ist Maleinsäuremono-n-butylester (MMBE) als Comonomeres heranzuziehen. Anstelle der freie Carboxylgruppen tragenden Comonomeren lassen sich auch deren Alkalisalze einsetzen. Das Gewichtsverhältnis von Vinylchlorid zu Comonomeren sollte 98 zu 2 bis 85 zu 15, vorzugsweise 97 zu 3 bis 94 zu 6, betragen.

Wird die Polymerisation in wäßriger Emulsion durchgeführt, so kommen als Katalysatoren die bei der Emulsionspolymerisation üblichen wasserlöslichen Verbindungen, wie Wasserstoffperoxid und Natriumpersulfat, in üblicher Konzentration infrage, gegebenenfalls in Kombination mit Reduktionsmitteln, wie Na-disulfit, Ascorbinsäure, Rongelit, u. a.

Vorzugsweise wird Kaliumpersulfat eingesetzt. Die Konzentration beträgt zweckmäßig 0,05 bis 5,0 Gewichtsprozent, vorzugsweise 0,1 bis 2,0 Gewichtsprozent, bezogen auf das Monomere. Als Emulgatoren lassen sich die bekannten Typen einsetzen. Es kommen insbesondere ionogene Emulgatoren infrage, z. B. Salze von Carbonsäuren, wie Natriumcaprinat, Natriumlaurat, Natriummyristat, Natriumpalmitat. Weiterhin eignen sich Salze primärer und sekundärer Alkylsulfate, z. B. Natriumcaprylsulfat, Natriumlaurylsulfat, Natriummyristylsulfat und Natriumoleylsulfat. Ebenso kommen infrage Sulfate veresterter Polyoxyverbindungen, wie monofettsaurer Glycerinschwefelsäureester, Salze primärer und sekundärer Alkylsulfonate, wie Natriumethylsulfonat, Natriumstearylsulfonat, Natriumoleylsulfonat, n-Alkansulfonate mit statistischer Verteilung der Sulfonsäuregruppe und Kettenlänge $C_{13}$-$C_{17}$ usw. Es können auch Alkylarylsulfonate eingesetzt werden, z. B. das Na-Salz der p-n-Dodecylbenzolsulfonsäure.

Weiterhin kommen auch Gemische von Emulgatoren in Betracht. Zu den genannten Emulgatoren können auch zusätzlich Hilfsstoffe beigegeben werden, z. B. Alkohol, wie Laurylalkohol, Ester, wie Sorbitmonolaurat und Carbonsäureglykolester.

Die Polymerisationstemperatur beträgt zweckmäßig - je nach gewünschtem K-Wert - 40 bis 70 $^{o}$C.

Wird die Verfahrensweise mit Herstellung einer Prädispersion angewendet, so kann nach bekannten Verfahren, wie sie z. B. in den DE-OSS 22 60 957, 26 29 655, 28 50 105 und 27 42 178 oder den deutschen Patentanmeldungen P 32 10 891.5 und P 32 42 088.9 beschrieben sind, vorgegangen werden. Im Wesentlichen bestehen diese Verfahrensweisen darin, daß aus einem Emulgator, einem höheren Fettalkohol und Wasser eine sogenannte Prädispersion hergestellt wird, welche dann mit dem Monomeren vereinigt wird. Es lassen sich nach diesem Prädispersionsverfahren Polymere herstellen, welche Plastisole besonders niedriger Viskosität ergeben.

Die Copolymerisate lassen sich in üblicher Weise, z. B. durch Sprühtrocknung, aufarbeiten. Wie eingangs festgestellt, eignen sie sich in besonders vorteilhafter Weise zur Herstellung von vernetztem Weich-Polyvinylchlorid. Man geht so vor, daß man aus dem erfindungsgemäß hergestellten Copolymeren, einem geeigneten Weichmacher, einer zwei- oder höherfunktionellen Epoxidverbindung und gegebenenfalls Stabilisatoren und üblichen Zusatzstoffen ein Plastisol herstellt. Die Herstellung der Plastisole aus den erfindungsgemäß hergestellten Copolymerisaten und deren Gelierung kann nach den bekannten Verfahrensweisen erfolgen, wie sie beispielsweise in der Monographie von Kainer, Polyvinylchlorid und Vinylchlorid-Mischpolymerisate, Springer-Verlag, Berlin/Heidelberg/New York, 1965, Seiten 332 bis 345, beschrieben sind. Geeignete Weichmacher sind in der o. a. Monographie von Kainer auf Seite 338 aufgeführt. Das Verhältnis von Weichmacher zu Copolymeren beträgt zweckmäßigerweise 150 zu 100 bis 40 zu 100.

Als zwei- oder polyfunktionelle Epoxidverbindungen, welche dem erfindungsgemäß hergestellten Copolymeren bzw. dem daraus erhaltenen Plastisol zugegeben werden, lassen sich einsetzen: Hexahydrophthalsäurediglycidylester, Vinylcyclohexendioxid, 3,4-Epoxycyclohexylmethyl-3,4-Epoxycyclohexancarboxylat, Bis-(3,4-epoxycyclohexylmethyl)-adipat, Trimethylolpropan-tris-(2,3-epoxypropyl-hexahydrophthalat), Tetrahydrophthalsäurediglycidylester, Bis-(glycidyloxymethyl)-tricyclodecan, Di-glycidylether des Bisphenol A oder Bisphenol F.

Es werden Mengen von 2,5 bis 6,0 Gewichtsprozent Epoxidkomponente, bezogen auf erfindungsgemäß hergestelltes Copolymeres, vorzugsweise 3 bis 5 Gewichtsprozent, eingesetzt. Die Gelierung erfolgt zweckmäßig bei Temperaturen von 150 bis 240 $^{\circ}$C in 30 Sekunden bis 8 Minuten. Die Kombination von Temperatur und Zeit hängt von der Art der verwendeten Gelierapparatur und von der Art der eingesetzten reaktiven Ausgangsstoffe ab.

Wie aus den nachfolgenden Beispielen und Vergleichsbeispielen ersichtlich ist, erhält man bei Anwendung einer Arbeitsweise gemäß Stand der Technik (CA-PS 881 575) vernetztes Weich-Polyvinylchlorid mit einem Vernetzungsgrad zwischen 20 und 40 %. Erfindungsgemäß erzielt man mit den gleichen Mengen an Epoxid-Komponente jedoch Vernetzungsgrade zwischen 67 und 90 %. Es zeigt sich, daß durch das erfindungsgemäße Verfahren die Wirtschaftlichkeit des Vernetzungsprozesses in völlig überraschender Weise erheblich gesteigert wurde.

Die erfindungsgemäßen Produkte lassen sich für alle Anwendungen benutzen, bei denen Plastisole zur Herstellung von Weich-Polyvinylchlorid verwendet werden und Elastizität sowie Rückstellvermögen verbessert werden sollen, z. B. zur Herstellung von Kunstledern, Planenstoffen, Rückseitenbeschichtung von Bodenbelägen, VC-Bodenbelägen. Besonders bei geschäumtem Weich-Polyvinylchlorid bringt die Vernetzung mit den erfindungsgemäßen Copolymeren und einem Epoxid neue Eigenschaftskombinationen. Gewöhnlich haben offenzellige Weich-Polyvinylchloridschäume relativ gutes Rückstellvermögen, aber geringe mechanische Festigkeit. Geschlossenzellige Schäume dieser Art haben im Vergleich dazu höhere mechanische Festigkeiten, zeigen jedoch mäßiges Rückstellvermögen. Bei Verwendung der erfindungsgemäßen Produkte erhält man geschlossenzellige vernetzte Schäume. Der besondere technische Fortschritt dieser Schäume liegt darin, daß sie bei hoher mechanischer Festigkeit auch gutes Rückstellvermögen zeigen.

Zur weiteren Erläuterung der Erfindung und der damit erzielbaren Vorteile werden die folgenden Beispiele angeführt (VC = Vinylchlorid, MMBE = Maleinsäuremono-n-butylester).

Vergleichsbeispiel 1

In einem 40 1-Autoklaven mit Blattrührer werden 9 200 g voll entsalztes Wasser, 9 700 g VC, 300 g MMBE und 15 g Kaliumpersulfat vorgelegt. Die Reaktion wird bei einer Rührerdrehzahl von 120 Upm und einer Temperatur von 40 $^{\circ}$C durch entsprechende Dosierung einer 1 %igen wäßrigen Natriumdisulfitlösung gestartet. Nach etwa 5 % Umsatz wird mit der Dosierung von 4 Litern einer 1, 75 %igen wäßrigen L sung eines Alkylarylsulfonats begonnen. Die Emulgatorlösung wird innerhalb von 7 Stunden so dosiert, daß nach 2 Stunden 4 %, nach 3 Stunden 13 %, nach 4 Stunden 30 % und nach 7 Stunden die gesamte Menge zudosiert ist. Die Polymerisation ist in ca. 8 Stunden bis zu einem Rest VC-Druck von 5, 5 bar geführt. Dann wird auf Raumtemperatur gekühlt, entgast und die Dispersion durch Sprühtrocknung aufgearbeitet. Während der Polymerisation wurde bei einem Umsatz von 10 bis 20 % eine Probe zur Analyse des Copolymeren entnommen. Das Ergebnis ist der Tabelle 1 zu entnehmen.

Vergleichsbeispiel 2

Der Versuch verläuft entsprechend Vergleichsbeispiel 1, es werden aber 9 400 g VC und 600 g MMBE eingesetzt. Tabelle 1 enthält das Ergebnis der Analyse.

Vergleichsbeispiel 3

Die Versuchsführung ist wie in Vergleichsbeispiel 1, die Monomermengen sind jedoch 9 000 g VC und 1 000 g MMBE. Das Analysenergebnis enthält Tabelle 1.

Beispiel 1

In einem 40 1-Autoklaven mit Blattrührer werden 9 200 g voll entsalztes Wasser, 2 000 g VC und 120 g MMBE sowie 15 g Kaliumpersulfat vorgelegt. Die Reaktion wird bei einer Rührerdrehzahl von 120 Upm und einer Temperatur von 40 $^{o}$C durch Dosierung einer 1 %igen Natriumdisulfitlösung gestartet. Der Umsatz kann mit einer am Kessel angebrachten Apparatur kontinuierlich verfolgt werden. Nach einem Umsatz von ca. 20 % werden 7 400 g VC und 480 g MMBE innerhalb von 6 Stunden mit konstanter Geschwindigkeit parallel zudosiert. Gleichzeitig wird mit der Emulgatordosierung wie im Vergleichsbeispiel 1 begonnen. Vor Beginn des Versuchs wird mit Hilfe der Umsatz-Absorptionseichkurven die Absorptionskurve während der Monomerendosierung ermittelt, die den Polymerisationsverlauf beschreibt, bei dem gerade soviel an Polymermenge entsteht, wie an Monomermenge nachdosiert wird. Diese Absorptionskurve wird durch entsprechende Dosierung der Disulfitlösung angesteuert. Die gesamte Polymerisation während der Monomerdosierung verläuft beim Sättigungsdruck des VC. Nach ca. 8 Stunden ist die Reaktion beendet. Das analytische Ergebnis der Probennahme zwischen 10 und 20 % Umsatz, bezogen auf die Gesamtmenge der eingesetzten Monomeren, ist der Tabelle 1 zu entnehmen.

## Vergleichsbeispiel 4

Es wird mit 97 % VC und 3 % MMBE entsprechend Beispiel 1 polymerisiert, jedoch wird die Polymerisationsgeschwindigkeit nicht der Dosiergeschwindigkeit angepaßt. Nach Entgasung wird die Dispersion in üblicher Weise sprühgetrocknet. 100 Teile des Copolymerpulvers, 100 Teile Weichmacher DOP, 0,3 Teile Zinnstabilisator und 3 Teile Hexahydrophthalsäurediglycidylester werden zu einem Plastisol vermischt. Das Plastisol wird auf einer Glasplatte zu einer ca. 300 µm dicken Schicht gezogen und bei 200 °C in einem Umluftofen geliert. 200 mg des entstandenen Films werden in 30 ml Tetrahydrofuran gegeben und 24 Stunden bei Raumtemperatur geschüttelt. Der unlösliche Anteil wird quantitativ bestimmt und als Vernetzungsgrad (Prozent unlöslicher Anteil, bezogen auf die Menge Copolymer + Epoxid) angegeben. Im angegebenen Beispiel beträgt der Vernetzungsgrad 20 %.

## Beispiel 2

Vergleichsbeispiel 4 wird in der Weise variiert, daß wie in Beispiel 1 mit Hilfe der Umsatzmessung die Reaktionsgeschwindigkeit der Dosiergeschwindigkeit der Monomeren angepaßt wird. Der Vernetzungsgrad nach Gelierung des dem Vergleichsbeispiel 4 entsprechenden Plastisols beträgt 67 %.

## Beispiel 3

Es wird entsprechend Beispiel 1 polymerisiert und die Dispersion durch Sprühtrocknung aufgearbeitet. 100 Teile Copolymer, 100 Teile DOP, 0,3 Teile Zinnstabilisator und 6 Teile Hexahydrophthalsäurediglycidylester werden zu einem Plastisol vermischt. Das Plastisol wird auf einer Glasplatte zu einer ca. 300 µm dicken Schicht gezogen und bei 200 °C im Umluftofen geliert. Der Vernetzungsgrad beträgt 90 %.

**0134927**

### Beispiel 4

Es wird wie in Beispiel 3 verfahren, aber statt mit 6 Teile Hexahydrophthalsäurediglycidylester mit 2,5 Teilen Vinylcyclohexendioxid als Epoxid vernetzt. Der Vernetzungsgrad beträgt 80 %.

### Beispiel 5

Es wird wie in Beispiel 3 verfahren, aber statt mit dem Hexahydrophthalsäurediglycidylester mit 5 Teilen 3,4-Epoxicyclohexylmethyl-3,4-Epoxicyclohexancarboxylat als Epoxidkomponente gearbeitet. Der Vernetzungsgrad beträgt 86 %.

### Vergleichsbeispiel 5

Ein gemäß Vergleichsbeispiel 2 hergestelltes Copolymere wird, wie in Beispiel 1 dargestellt, vernetzt. Der Vernetzungsgrad beträgt 40 %.

### Vergleichsbeispiel 6

In einem 40 l-Autoklaven mit Blattrührer werden 9 000 g vollentsalztes Wasser, 100 g Alkylarylsulfonat, 60 g $C_{16}$-Alkohol, 40 g $C_{12}$-Alkohol, 15 g Tertiärbutylperbenzoat und 0,05 g Kupfersulfat eingewogen und auf 65 $^{\circ}$C aufgeheizt. Bei einer Rührerdrehzahl von 120 Upm wird 30 Minuten bei 65 $^{\circ}$C vordispergiert, dann die Innentemperatur des Kessels auf 40 $^{\circ}$C gesenkt und 1 880 g VC und 120 g MMBE zugeführt. Die Polymerisation wird durch Dosierung einer 0,3 %igen wäßrigen Ascorbinsäurelösung gestartet. Nach einem Umsatz von ca. 20 % der vorgelegten Monomermenge werden innerhalb von 4 Stunden 520 g VC und 480 g MMBE parallel zudosiert. Die Polymerisationsgeschwindigkeit wird nicht speziell an die Dosiergeschwindigkeit der Monomeren angepaßt. Nach ca. 7 Stunden ist die Reaktion beendet. Die Dispersion wird wie in Beispiel 3 aufgearbeitet und auch entsprechend das Plastisol geliert. Der Vernetzungsgrad beträgt 30 %.

Beispiel 6

Es wird wie in Vergleichsbeispiel 6 verfahren, nur mit dem Unterschied, daß Polymerisationsgeschwindigkeit und Dosiergeschwindigkeit angeglichen werden. Da der Absorption der radioaktiven Strahlung nach Eichung bestimmte Umsätze zuzuordnen sind, gehört für den Fall, daß Polymerisationsgeschwindigkeit und Dosiergeschwindigkeit gleich sind, zu jeder Absorptionsänderung eine bestimmte Dosiermenge. Die Beziehung zwischen Absorption und dosierter Monomermenge läßt sich in Form einer mathematischen Beziehung formulieren. Diese mathematische Funktion wird in einen Mikroprozessor eingegeben, der damit zu jedem aktuellen Absorptions-Zeit-Wert zu jeder Zeit den Monomerdosiersollwert errechnet und entsprechend die Dosierstellventile bedient. Auf diese Weise ist zu jeder Zeit das Gleichgewicht zwischen Polymerisationsgeschwindigkeit und Dosiergeschwindigkeit gewährleistet. Die Polymerisation ist in ca. 7 Stunden beendet. Die Aufarbeitung und Gelierung der Pasten erfolgt genau wie in Vergleichsbeispiel 6. Der Vernetzungsgrad beträgt 86 %.

Tabelle 1

| Versuch | MMBE in Monomermischung (%) | Monomerdosierung erfindungsgemäß | Umsatz (%) | MMBE im Copolymer (%) |
|---|---|---|---|---|
| Vgl.-Bsp. 1 | 3,0 | nein | 13,2 | 21,6 |
| Vgl.-Bsp. 2 | 6,0 | nein | 14,1 | 28,3 |
| Vgl.-Bsp. 3 | 10,0 | nein | 12,0 | 34,7 |
| Beispiel 1 | 6,0 | ja | 18,9 | 5,8 |

Vergleichsbeispiel 7 a

100 Teile Pasten-Polyvinylchlorid (Handelsprodukt A), 80 Teile Dioctylphthalat, 3 Teile Azodicarbonamid und 1,5 Teile Zink-Kicker werden zu einem Plastisol verarbeitet, zu einem 2 mm dicken Film ausgezogen und 2 Minuten bei 200 $^\circ$C geliert. Es entsteht ein feinporiger, vorwiegend offenzelliger Schaum. Es wird eine Probe von 11 cm Durchmesser genommen. Diese wird mit einer Platte von 7,5 cm Durchmesser mit einer Andruckspannung von 0,15 N/mm$^2$ für 25 Se-kunden belastet und die relative Verformung gemessen. Nach Entlastung wird die relative Verformung des Schaumes ebenfalls gemessen. Die Meßergebnisse sind Tabelle 2 zu entnehmen.

Vergleichsbeispiel 7 b

Es wird verfahren wie in Vergleichsbeispiel 7 a, aber 100 Teile Pasten-Polyvinylchlorid (Handelsprodukt B) verwendet. Es entsteht ein feinporiger, vorwiegend geschlossenzelliger Schaum. Die Meßergebnisse sind Tabelle 2 zu entnehmen.

Beispiel 7

100 Teile Copolymer, hergestellt wie in Beispiel 1, 80 Teile Dioctylphthalat, 3 Teile Azodicarbonamid, 1,5 Teile Zink-Kicker und 2,6 Teile Vinylcyclohexendioxid werden zu einem Plastisol verarbeitet, zu einem 2 mm dicken Film ausgezogen und 2 Minuten bei 200 $^\circ$C ge-liert. Es entsteht ein feinporiger, vernetzter, vorwiegend geschlossenzelliger Schaum. Der Test wird wie in den Vergleichsbeispielen durchgeführt. Die Ergebnisse sind Tabelle 2 zu entnehmen.

0134927

Tabelle 2

| PVC | Schaum-struktur | Vernet-zung | Relative Verfor-mung nach 25 sec Belastung | Relative Verfor-mung 25 sec nach Entlastung |
|---|---|---|---|---|
| A | offenzellig | nein | 88,5 % | 22 % |
| B | geschlossen-zellig | nein | 79 % | 31 % |
| erfindungsge-mäß wie Bei-spiel 1 | geschlossen-zellig | ja | 66 % | 1,5 % |

Die Handelsprodukte A und B sind Vestolit-Typen von hüls.

Patentansprüche:

1. Diskontinuierliches Verfahren zur Herstellung von Copolymerisaten aus Vinylchlorid und ungesättigten Verbindungen, die als funktionelle Gruppen eine oder mehrere -COOH- oder -COO⁻-Gruppen tragen, durch Emulsionspolymerisation unter Verwendung wasserlöslicher Katalysatoren und Emulgatoren oder durch Polymerisation nach dem Prädispersionsverfahren unter Verwendung von höheren Fettalkoholen und Emulgatoren sowie wasser- und (oder) öllöslicher Katalysatoren,
dadurch gekennzeichnet,
daß die Monomeren in der einzupolymerisierenden Relation stets mit der Geschwindigkeit zugegeben werden, mit der sie in das Copolymere eingebaut werden.

2. Diskontinuierliches Verfahren nach Anspruch 1,
dadurch gekennzeichnet,
daß das Gewichtsverhältnis Vinylchlorid zu -COOH- oder -COO⁻-Gruppen tragenden Monomeren 98 zu 2 bis 85 zu 15 beträgt.

3. Diskontinuierliches Verfahren nach den Ansprüchen 1 und 2,
dadurch gekennzeichnet,
daß die Polymerisationsgeschwindigkeit der Monomerzugabegeschwindigkeit angepaßt wird.

4. Diskontinuierliches Verfahren nach den Ansprüchen 1 bis 3,
dadurch gekennzeichnet,
daß die Zugabegeschwindigkeit der Monomeren der Polymerisationsgeschwindigkeit angepaßt wird.

5. Verwendung der nach den Ansprüchen 1 bis 4 hergestellten Copolymerisate zur Herstellung von vernetztem Weich-Polyvinylchlorid durch Zusatz zwei- oder polyfunktioneller Epoxidverbindungen
zu aus den erfindungsgemäß erhaltenen Copolymeren hergestellten
Plastisolen und anschließendes Gelieren bei höherer Temperatur.

**Europäisches Patentamt**

## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A,D | CA-A- 881 575 (B.F. GOODRICH COMPANY) <br> * Ansprüche * | 1-5 | C 08 F 214/06 <br> C 08 F   2/16 <br> C 08 L  27/06 // <br> (C 08 F 214/06 <br> C 08 F 218/14 <br> C 08 F 220/04 ) |
| X | DE-C- 942 352 (HOECHST AG) <br> * Ansprüche; Beispiel 2 * | 1-4 | |
| X | EP-A-0 007 531 (BASF AG) <br> * Anspruch 1; Seite 8, Zeile 32 - Seite 9, Zeile 17 * | 1-4 | |

| RECHERCHIERTE SACHGEBIETE (Int. Cl.4) |
|---|
| C 08 F <br> C 08 L |

Der vorliegende Recherchenbericht wurde für alle Patentansprüche erstellt.

| Recherchenort | Abschlußdatum der Recherche | Prüfer |
|---|---|---|
| DEN HAAG | 21-11-1984 | HOFFMANN K.W. |